# EUROPEAN PATENT APPLICATION

(11) **EP 1 426 951 A2**
(43) Date of publication of application: **09.06.2004**
(21) Application number: 03251545.4
(22) Date of filing: 13.03.2003
(51) Int. Cl.: G11B 20/00

(54) **Terminal apparatus capable of using a recording medium with a copyright protection function**

(30) Priority: 18.10.2002 JP 2002304734
(71) Applicant: Kabushiki Kaisha Toshiba, Tokyo (JP)
(72) Inventor: Sato, Jun, c/o Intellectual Property Division, Minato-ku, Tokyo 105-8001 (JP); Terauchi, Toru, c/o Intellectual Property Division, Minato-ku, Tokyo 105-8001 (JP)
(74) Representative: Kemp, Paul Geoffrey

(57) **Abstract**

Binding information used to encrypt a first encryption key for encrypting content is encrypted on the basis of a second encryption key and the encrypted binding information is stored in a recording medium (MC). At the same time, the second encryption key is encrypted on the basis of first unique information specifying the recording medium (MC) and the encrypted second encryption key is stored in the recording medium (MC). On the other hand, when the encrypted content is reproduced from the recording medium (MC), the encrypted second encryption key is decrypted on the basis of the first unique information. On the basis of the decrypted second encryption key, the encrypted binding information is decrypted. Using the decrypted binding information or the first encryption key decrypted on the basis of the binding information, the encrypted content is decrypted.

## Description

This invention relates to a terminal apparatus capable of recording or reproducing content by use of a recording medium with a copyright protecting function.

This invention also relates to a content management system capable of managing content through a network and a management server for the system.

In recent years, more and more digital terminal apparatuses, including personal computers, mobile phones, PDAs (Personal Digital Assistants), audio players, or electronic cameras, have been provided with the function of reproducing content by use of a recoding medium, such as a memory card, an optical disc or a magnetic disc. In addition, an increasing number of recoding mediums for use with this type of terminal apparatus have been provided with a copyright protecting function. Those techniques have been disclosed in, for example, Jpn. Pat. Appln. KOKAI Publication No. 2001-23353, Jpn. Pat. Appln. KOKAI Publication No. 2001-22647, or Jpn. Pat. Appln. KOKAI Publication No. 2001-67267.

The concept of copyright protection applied to recording mediums mainly includes media binding feature, set binding feature, and user binding feature. By means of media binding feature, content is bound only to recording mediums. By means of set binding feture, content is bound to not only recording mediums but also terminal apparatuses. By means of user binding feature, content is bound to not only recording mediums but also users.

In media binding, for example, a key for encrypting or decrypting content (hereinafter, referred to as a content encryption key) is encrypted using information unique to a recording medium (hereinafter, referred to as a media ID), such as the serial number or lot number of the recording medium, and the encrypted content encryption key is stored in a special protected memory area of the medium. When the content is reproduced, the media ID is read from the special protected memory area and the content encryption key is decrypted by using the media ID. Then, the content is decrypted using the decrypted content encryption key. Therefore, even if the content is copied illegally into another memory card or the like, since the original media ID differs from the media ID at the copy destination, the content encryption key cannot be acquired properly, which prevents the content from being copied illegally.

In set binding, the media ID and information unique to the terminal apparatus (hereinafter, referred to as the set ID), such as the serial number of the terminal apparatus, are combined and the content encryption key is encrypted with the combined IDs. This encrypted content encryption key is stored in a special protected memory area of the medium. Then, when the content stored in the recording medium is reproduced, the encrypted content encryption key is decrypted on the basis of the media ID and set ID and the content is decrypted using the decrypted content encryption key.

Similarly, in user binding, the media ID and information unique to the user who uses content (hereinafter, referred to as the user ID) are combined and the content encryption key is encrypted with the combined IDs. This encrypted content encryption key is stored in a special protected memory area of the recording medium. Then, when the content stored in the recording medium is reproduced, the encrypted content encryption key is decrypted on the basis of the media ID and user ID and the content is decrypted using the decrypted content encryption key. The membership registration number, telephone number, employee number, or student number of the user may be used as the user ID.

Furthermore, the copyright protecting function of the recording medium further includes the encrypting of the content encryption key by use of a combination of three types of IDs, the media ID, set ID, and user ID.

As described above, encrypting the content encryption key by use of an ID composed of a combination of arbitrary IDs makes it possible to protect the copyright of the content according to the purpose. In general, an ID created by combining a plurality of IDs is called a binding ID.

In the above-described copyright protection techniques, the content encryption key is encrypted using the binding ID created by combining a plurality of IDs. This causes the following problem: for example, when the terminal apparatus has failed and a new one is bought, the set ID changes and therefore the binding ID cannot be created properly, which makes it impossible to reproduce the content.

Furthermore, it is unknown which ID combination constitutes the binding ID. For this reason, to reproduce the content, the terminal apparatus has to create binding IDs one by one for all of the ID combinations and try to reproduce the content until it has found the binding ID that enables the content to be reproduced. As a result, as the number of IDs to be combined increases, the number of calculations and the time required for decryption increase, which makes larger the processing burden on the apparatus. This problem is very undesirable for an apparatus powered by a battery, such as a mobile phone or a PDA.

The object of the present invention is to provide a recording medium capable of recording and reproducing easily with a small amount of decryption while maintaining secrecy, even when the binding information currently being used is changed, and a terminal apparatus using the recording medium.

According to an aspect of the present invention, a recording medium is provided with a binding information storage area in addition to a content storage area. A terminal apparatus comprises means for encrypting the content on the basis of binding information created from first unique information specifying the recording medium and second unique information separately set from the first unique information and recording the encrypted content in the recording medium, means for encrypting the binding information on the basis of the first unique information and causing the recoding medium to store the encrypted binding information, means for reading the encrypted binding information from the recording medium and decrypting the encrypted binding information on the basis of the first unique information, and means for reading the encrypted content from the recording medium and decrypting the read-out encrypted content on the basis of the decrypted binding information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a circuit configuration of a terminal apparatus according to a first embodiment of the present invention;
FIG. 2 is a block diagram showing the configuration of a memory card related to the first embodiment;
FIG. 3 shows the configuration of a protected area of the memory card of FIG. 2 and an example of the format of stored data;
FIG. 4 shows the configuration of a user data R/W area of the memory card of FIG. 2 and an example of the format of stored data;
FIG. 5 is a sequence diagram showing the procedure for the process of recording the content from the terminal apparatus into the memory card and the contents of the process;
FIG. 6 is a sequence diagram showing the procedure for the process of writing a binding management file and the contents of the process;
FIG. 7 is a sequence diagram showing the procedure for the process of reproducing the content recorded in the memory card and the contents of the process;
FIG. 8 is a sequence diagram showing the procedure for the process of decrypting the content by use of the binding ID before change and the contents of the process;
FIG. 9 is a block diagram showing the configuration of a content management system according to a second embodiment of the present invention;
FIG. 10 is a block diagram showing the configuration of a content server used in the content management system of FIG. 9;
FIG. 11 is a block diagram showing the configuration of a management server used in the content management system of FIG. 9;
FIG. 12 is a sequence diagram showing the processing procedure when the terminal apparatus of the transferor creates a binding ID and the contents of the processing; and
FIG. 13 is a sequence diagram showing the processing procedure when the terminal apparatus of the transferee decrypts the content by using the binding ID transmitted from the management server and the contents of the processing.

### (First Embodiment)

In a first embodiment of the present invention, a binding ID composed of a media ID and an additional ID, such as set ID and user ID, is encrypted using the media ID and the encrypted binding ID is stored in a memory card. Then, when the binding ID or additional ID is changed, a content is decrypted using the binding ID stored in the memory card. The decrypted content is re-encrypted using the changed binding ID and the re-encrypted content is stored into the memory card again.

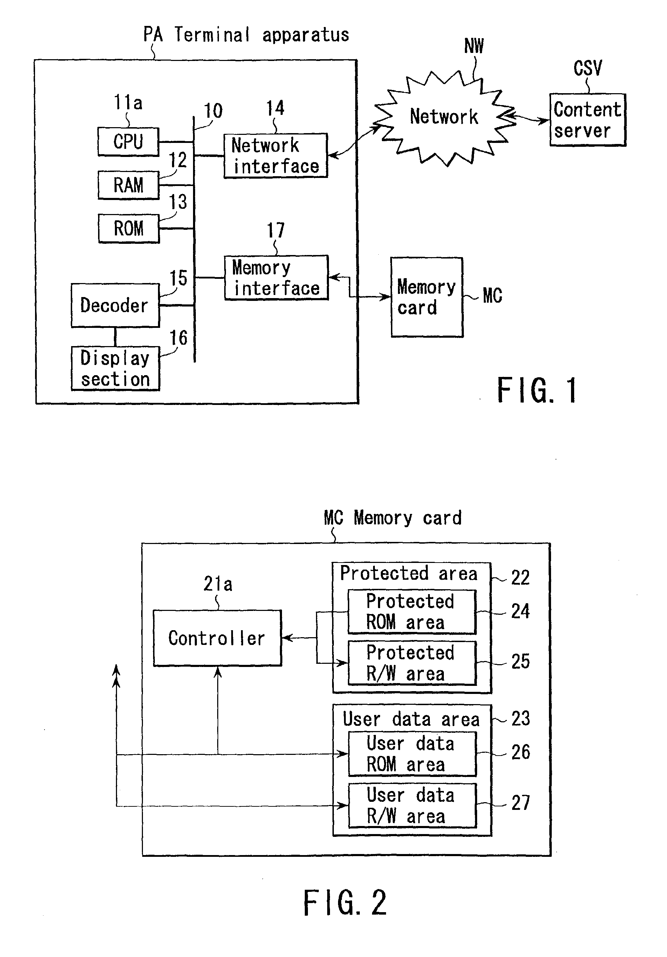

FIG. 1 is a block diagram showing a circuit configuration of a terminal apparatus PA according to the first embodiment.

The terminal apparatus PA includes a CPU 11a using, for example, a microprocessor. A RAM 12, a ROM 13, a network interface 14, a decoder 15, a display section 16, and a memory interface 17 are connected to the CPU 11a via a bus 10.

A content server CSV is connected via a network NW to the network interface 14. Under the control of the CPU 11a, the network interface 14 communicates with the content server CSV to download content data. The network NW is composed of a computer network, such as the Internet, and an access network for connecting the terminal apparatus PA to the computer network. The access network is composed of a wired public network, such as, ISDN (Integrated Service Digital Network) or PSTN (Public Switched Telephone Network), a mobile communication network, a CATV (Cable Television) network, a LAN (Local Area Network), and the like.

A memory card MC is connected detachably to the memory interface 17. Under the control of the CPU 11a, the memory interface 17 writes and reads data into and from the memory card MC. The content downloaded from the content server CSV via the network NW, the content stored in the RAM 12 or ROM 13, and the like are stored in the memory card MC. The content includes all types of content delivered to the user, including music, still pictures, moving pictures, text data, and programs. In addition, electronic mail, bookmarks, and personal data, such as a telephone directory, are also included in the concept of the content.

The decoder 15 decodes the content downloaded from the content server CSV or the content stored in the memory card MC and displays the decoded content on the display section 16. The display section 16 is composed of, for example, an LCD (Liquid Crystal Display).

FIG. 2 is a block diagram showing the configuration of the memory card MC. Specifically, the memory card MC includes a controller 21a and a storage section. The storage section includes a protected area 22 and a user data area 23.

The protected area 22 is a logical storage area accessible only according to a closed procedure via the controller 21a, that is, a concealed specific procedure, and is used to store information necessary to decrypt the content. The protected area 22 is composed of a protected ROM area 24 in which a secret invariable is stored and a protected read/write (R/W) area 25 in which a confidential variable is stored. Physically, the protected ROM area 24 is secured on, for example, a ROM (read-only memory) and the protected R/W area 25 is secured in a specific area of, for example, a flash memory (rewritable nonvolatile memory).

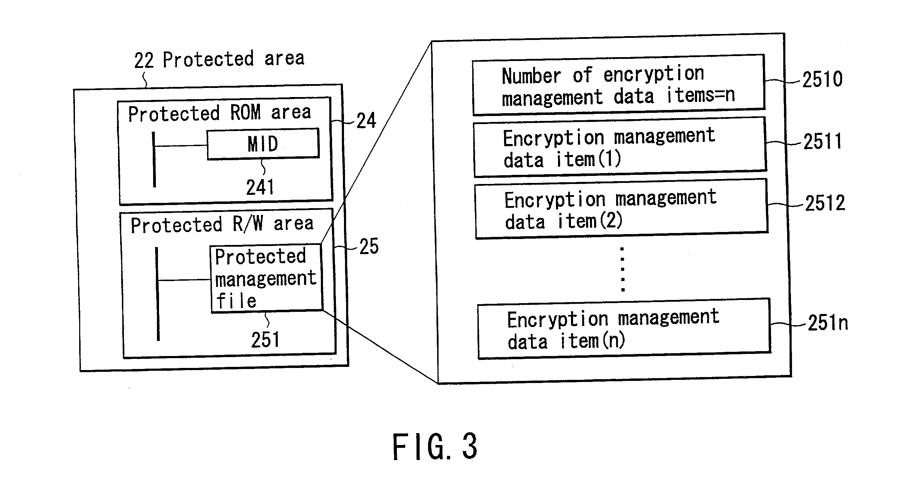

FIG. 3 shows the configuration of the protected area 22 and the contents of the stored data. In the protected ROM area 24, a media ID (MID) 241 explained later is stored. MID is identification information uniquely allocated to each memory card. For example, a serial number or a production number is used as MID.

In the protected R/W area 25, a protected management file 251 is stored. The protected management file 251 is for storing the key data for decrypting the content, licensing information about the content, and the like. In a first field 2510, the number of encryption management data items = n explained later is stored. In each of the fields 2511 to 251n following the first field 2510, an n number of encryption management data items indicated by the number of encryption management data items = n are stored. The encryption management data is obtained by encrypting the key data for decrypting the content or licensing information about the content. How they are encrypted will be explained later.

On the other hand, the user data area 23 is a logical storage area accessible according to an ordinary procedure excluding the protected area 22. The user data area 23 is composed of a read-only user data ROM area 26 and a rewritable user data read/write (R/W) area 27.

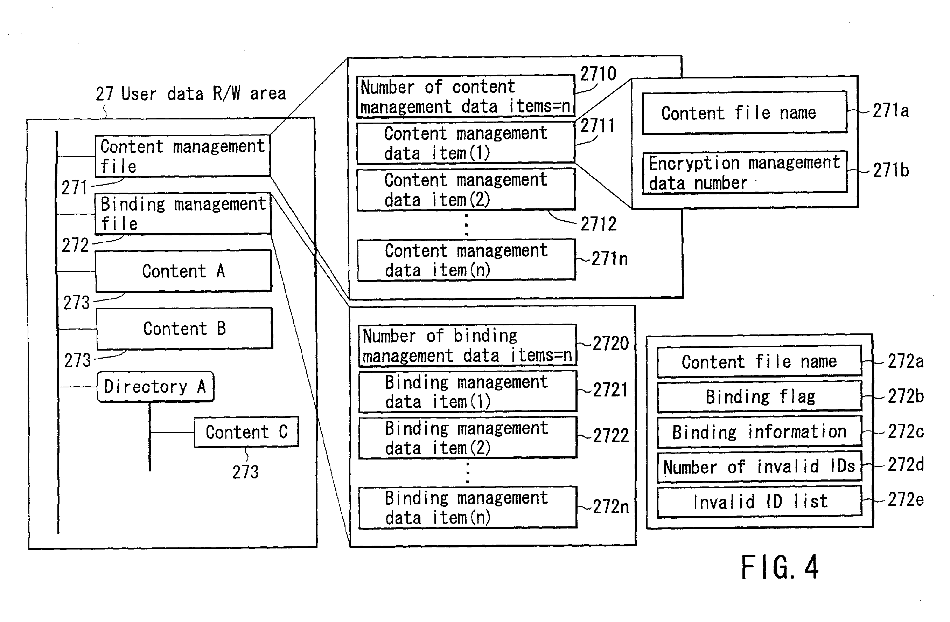

FIG. 4 shows the configuration of the user data R/W area 27 and the stored contents. In the user data R/W area 27, a content management file 271, a binding management file 272, and an arbitrary number of contents 273 are stored. The contents 273 may be stored under an arbitrary directory.

The content management file 271 is a file for relating the content stored in the memory card MC to encryption management data. In a first field 2710 of the content management file 271, the number of content management data items = n explained later is stored. In each of the fields 2711 to 271n following the first field 2710, an n number of content management data items indicated by the number of content management data items = n are stored.

Each content management data item is composed of two kinds of fields. In a first field 271a, the file name of the content is stored. When the content is stored in a directory, the file name of the content includes the path from the root directory. In a second field 271b, an encryption management data number is stored. The encryption management data number indicates in what number of the order of encryption management data items stored in the protected management file 251 counting from the first encryption management data item. For example, if the encryption management data number is N, the encryption management data item for the relevant content is the N-th encryption management data item in the protected management file 251.

The binding management file 272 is for managing binding management data. In a first field 2720 of the binding management file 272, the number of binding management data items = n is stored. The number of binding management data items indicates the number of stored binding management data items explained later. In each of the fields 2721 to 272n following the first field 2720, an n number of binding management data items indicated by the number of binding management data items = n are stored.

Each binding management data item is composed of five kinds of fields. In a first field, the file name of the corresponding content is stored. The content name has the same role as that of the content name of the content management file 271. In a second field 272b, a binding flag is stored. The binding flag indicates which ID is used as an additional ID, in bit flag form. In a third field 272c, binding information is stored. Specifically, a binding ID complying with the binding flag is stored, which will be explained later. An additional ID may be stored as the binding information in place of the binding ID.

In a fourth field 272d, the number of invalid ID lists is stored. In a fifth field 272e, an invalid ID list and the binding ID are stored. In place of the binding ID, an additional ID may be stored. The number of invalid ID lists indicates the number of invalid IDs included in the invalid ID list stored in the fifth field 272e. An invalid ID list is used to determine whether a new additional ID can be used to update the bind in binding again the content bound by the old ID, using a new ID. The old additional ID or binding ID is added to the invalid ID list each time the bind updating process is carried out.

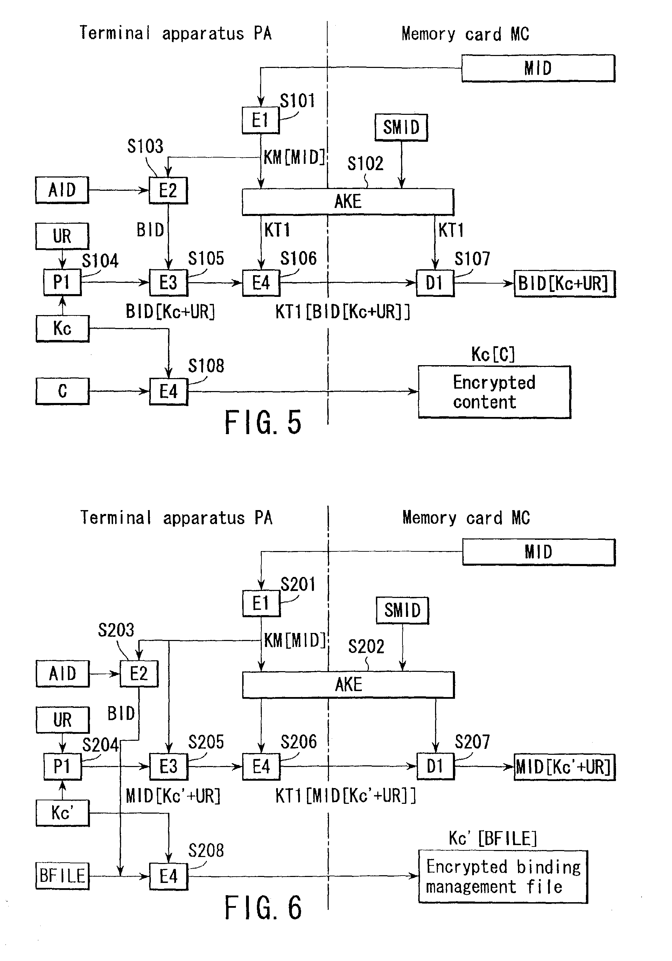

Next, a content management processing operation carried out by the terminal apparatus PA and memory card MC configured as described above will be explained by reference to FIGS. 5 to 8.

A case where the content downloaded from the content server CSV is recorded from the terminal apparatus PA into the memory card MC will be explained. FIG. 5 is a sequence diagram showing the procedure for the process and the content of the process.

In step S101, the terminal apparatus creates information (KM[MID]) necessary for a mutual authenticating process (AKE). KM[MID] is obtained by acquiring the media ID (MID) from the memory card MC and doing calculations using the acquired MID. KM[MID] may be the media ID itself stored in the protected area of the memory card MC or be obtained by doing calculations on the basis of the device ID of the terminal apparatus PA and the value stored in the memory card MC.

Then, in step S102, the terminal apparatus PA executes a mutual authenticating process (AKE) using the created information KM[MID]. At this time, in the memory card MC, too, a mutual authenticating process (AKE) using the private secure media ID (SMID) is carried out. The terminal apparatus PA and memory card MC share the same functions g (x, y) and h (x, y) . Therefore, in the mutual authenticating process (AKE), if the information KM[MID] created at the terminal apparatus PA is the same as the private secure media ID (SMID) of the memory card MC, one of the terminal PA and the memory card MC can verify the authenticity of the other. The mutual authenticating process has been disclosed in detail in, for example, Jpn. Pat. Appln. KOKAI Publication No. 2001-23353, Jpn. Pat. Appln. KOKAI Publication No. 2001-22647, or Jpn. Pat. Appln. KOKAI Publication No. 2001-67267. When the terminal apparatus PA and memory card MC have authenticated each other in the mutual authenticating process (AKE), the terminal apparatus PA proceeds to the next process.

In step S103, the terminal apparatus PA creates a binding ID BID from the media ID (MID) and an additional ID (AID). The additional ID (AID) may be, for example, an ID to specify the terminal apparatus PA, an ID to specify the user, or an ID to specify the group to which the terminal apparatus PA or the user belongs. The binding ID BID may be created using not only one kind of additional ID (AID) but also a plurality of kinds of ID (AID).

In step S104, the terminal apparatus PA combines a first content encryption key Kc and usage rule information UR on how to use the content to create information Kc + UR. Then, in step S105, the terminal apparatus PA encrypts the created information Kc + UR using the binding ID BID created in step S103, thereby creating BID[Kc+UR]. In step S106, the terminal apparatus PA further encrypts the BID[Kc+UR] using the key information KT1 created in the mutual authenticating process (AKE) in step S102 and transfers the encrypted information KT1[BID[Kc+UR]] from the memory interface 17 to the memory card MC.

In step S107, the controller 21a of the memory card MC decrypts the encrypted information KT1[BID[Kc+UR]] transferred from the terminal apparatus PA by using the key information KT1 created in the mutual authenticating process (AKE) in step S102. Then, the controller 21a stores the decrypted information BID[Kc+UR] in the protected management file 251 as encryption management data. Moreover, the controller 21a stores the number of the encryption management data in the content management file 271 as content management data.

After the decrypted information BID[Kc+UR] has been stored, the terminal apparatus PA encrypts the content C using the first content encryption key Kc in step S108. Then, the terminal apparatus PA transfers the encrypted content information Kc[C] from the memory interface 17 to the memory card MC. The memory card MC stores the content information Kc[C] transferred from the terminal apparatus PA into the user data R/W area 27. At the same time, the memory card MC also creates content management data and stores the created content management data in the content management file 271.

Next, the operation of writing the binding management file will be explained. FIG. 6 is a sequence diagram showing the procedure for the process and the contents of the process.

In step S201, the terminal apparatus PA creates information KM[MID] necessary for a mutual authenticating process (AKE). As in the process of writing the content described in FIG. 5, KM[MID] is obtained by acquiring the media ID (MID) from the memory card MC and doing calculations on the basis of the media ID (MID). KM[MID] may be the media ID itself stored in the protected ROM area 24 of the memory card MC or be obtained by doing calculations on the basis of the set ID of the terminal apparatus PA and the value stored in the memory card MC.

Then, in step S202, the terminal apparatus PA executes a mutual authenticating process (AKE) using the created information KM[MID]. At this time, in the memory card MC, too, a mutual authenticating process (AKE) is carried out using the private secure media ID (SMID). The terminal apparatus PA and memory card MC share the same functions g(x,y) and h(x,y). Therefore, in the mutual authenticating process (AKE), if the information KM[MID] created at the terminal apparatus PA is the same as the private secure media ID (SMID) of the memory card MC, one of the terminal PA and the memory card MC can verify the authenticity of the other. When the terminal apparatus PA and memory card MC have authenticated each other in the mutual authenticating process (AKE), the terminal apparatus PA proceeds to the next process.

In step S203, the terminal apparatus PA creates a binding ID BID from the media ID (MID) and an additional ID (AID). In step S204, the terminal apparatus PA combines a second content encryption key Kc' and usage information UR on how to use the binding management file to create information Kc' + UR. Then, in step S205, the terminal apparatus PA encrypts the created information Kc' + UR using the information KM[MID] including the media ID created in step S201, thereby creating content encryption key information MID[Kc'+UR]. In step S206, the terminal apparatus PA further encrypts the created content encryption key information MID[Kc'+UR] using the key information KT1 created in the mutual authenticating process (AKE) in step S202 and transfers the encrypted information KT1[MID[Kc'+UR]] from the memory interface 17 to the memory card MC.

In step S207, the controller 21a of the memory card MC decrypts the encrypted information KT1[BID[Kc'+UR]] transferred from the terminal apparatus PA by using the key information KT1 created in the mutual authenticating process (AKE) in step S202. Then, the controller 21a stores the decrypted information MID[Kc'+UR] in the protected management file 251 as encryption management data.

Finally, in step S208, the terminal apparatus PA encrypts the binding management file using the content encryption key Kc' and transfers the encrypted binding management file Kc' [BFILE] from the memory interface 17 to the memory card MC. The controller 21a of the memory card MC stores the transferred encrypted binding management file Kc'[BFILE] in the user data R/W area 27.

Furthermore, in the binding management data in the binding management file 272, the content file name of the corresponding content and the binding flag are also stored. The binding flag indicates what combination of IDs has been used to encrypt the content. Moreover, AID is added to the invalid ID list and the number of invalid IDs is incremented accordingly. In addition, the controller 21a of the memory card MC updates the number of bind management data items in the binding management file 272.

That is, the binding management file 272 stored in the user data R/W area 27 of the memory card MC is bound by the media ID.

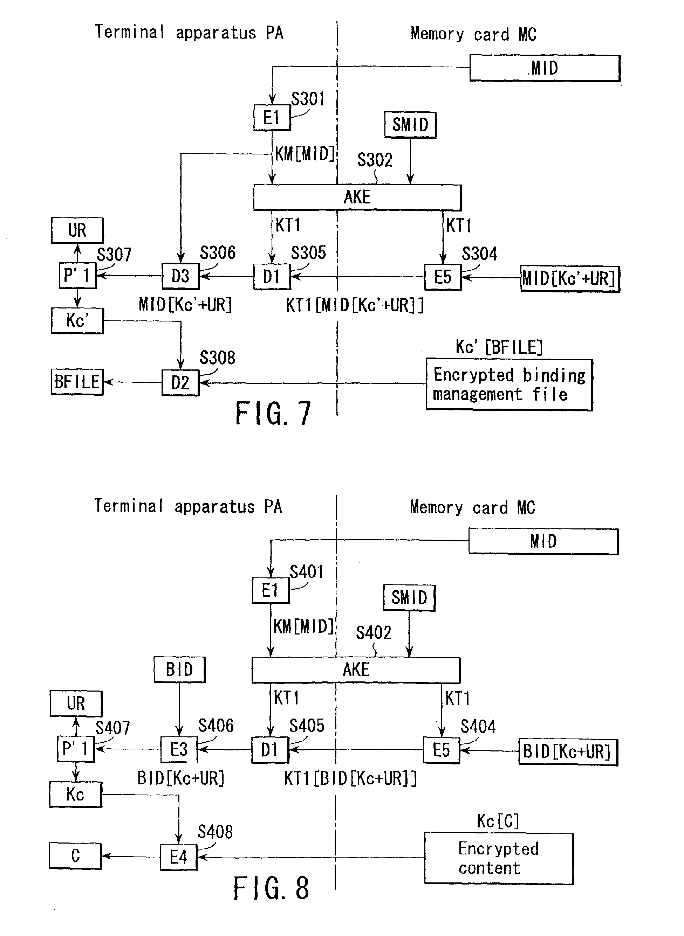

The following is an explanation of a processing operation in reproducing the content recorded in the memory card MC before the additional binding ID is changed in a case where the additional ID is changed as a result of the purchase or replacement of a new terminal apparatus, the change of the user, or the like. FIG. 7 is a sequence diagram showing the procedure for the process and the contents of the process.

In step S301, the terminal apparatus PA creates information (KM[MID]) necessary for a mutual authenticating process (AKE). KM[MID] is obtained by acquiring the media ID (MID) from the memory card MC and doing calculations on the basis of the acquired MID. Then, in step S302, the terminal apparatus PA executes a mutual authenticating process (AKE) using the created information KM[MID]. At this time, in the memory card MC, too, the controller 21a carries out a mutual authenticating process (AKE) using the secure media ID (SMID). When the terminal apparatus PA and memory card MC have authenticated each other in the mutual authenticating process (AKE), the memory card MC proceeds to the next process.

Specifically, the memory card MC reads the content encryption key information MID[Kc'+UR] from the protected R/W area 25. The information MID[Kc'+UR] has been encrypted using the media ID. Then, in step S304, the memory card MC encrypts the read-out information MID[Kc'+UR] using the key information KT1 created in the mutual authenticating process (AKE). Then, the memory card transfers the encrypted information KT1[MID[Kc'+UR]] to the terminal apparatus PA.

In step S305, using the key information KT1 created in the mutual authenticating process (AKE), the terminal apparatus PA decrypts the encrypted information KT1[MID[Kc'+UR]] transferred from the memory card MC. Then, in step S306, the terminal apparatus PA decrypts the decrypted encrypted content encryption key information MID[Kc'+UR] using the information KM[MID] indicating the media ID created in step S301. As a result, information Kc'+UR, which is a combination of the content encryption key Kc' and usage rule information UR about how to use the content, is obtained. Then, in step S307, the usage rule information UR about how to use the content is separated from the information Kc'+UR, thereby acquiring the content key Kc'.

Then, the terminal apparatus PA reads the binding management file Kc'[BFILE] encrypted using the content encryption key Kc' from the user data R/W area 27 of the memory card MC. Thereafter, in step S308, the terminal apparatus PA decrypts the read-out encrypted binding management file Kc'[BFILE] using the content encryption key Kc'. From the decrypted binding management file BFILE, the binding ID (BID) before the change used in encrypting the content, the binding flag, and the invalid binding ID list can be acquired.

The terminal apparatus PA checks the invalid binding ID list and determines whether the changed binding ID (BID') is in the invalid ID list. If the result of the determination has shown that the changed binding ID (BID') is in the invalid binding ID list, the terminal apparatus PA stops the process.

In contrast, when having verified that the changed binding ID (BID') is not in the invalid binding ID list, the terminal apparatus PA carries out the process of decrypting the content as described below, using the binding ID (BID) before the change acquired from the binding management file BFILE and the binding flag. FIG. 8 is a sequence diagram showing the procedure for the process and the contents of the process.

In step S401, the terminal apparatus PA creates information KM[MID] necessary for a mutual authenticating process (AKE). KM[MID] is obtained by acquiring the media ID (MID) from the memory card MC and doing calculations using the acquired media MID. Then, in step S402, the terminal apparatus PA executes a mutual authenticating process (AKE) using the created information KM[MID]. At this time, in the memory card MC, too, a mutual authenticating process (AKE) is carried out using the secure media ID (SMID). When the terminal apparatus PA and memory card MC have authenticated each other in the mutual authenticating process (AKE), the memory card MC proceeds to the next process.

Specifically, the memory card MC reads the encryption management data BID[Kc+UR] from the protected R/W area 25. Then, in step S404, the memory card MC encrypts the read-out information BID[Kc+UR] using the key information KT1 created in the mutual authenticating process (AKE). Then, the memory card MC transfers the encrypted information KT1[BID[Kc+UR]] to the terminal apparatus PA.

In step S405, using the key information KT1 created in the mutual authenticating process (AKE), the terminal apparatus PA decrypts the encrypted information KT1[BID[Kc+UR]] transferred from the memory card MC. Then, the terminal apparatus PA decrypts the decrypted information BID [Kc+UR] using the binding ID (BID) before the change acquired from the binding management file BFILE. As a result, information Kc+UR, which is a combination of the first content encryption key Kc and usage rule information UR about how to use the content, is obtained. Then, the usage rule information UR about how to use the content is separated from the information Kc+UR, thereby acquiring the content key Kc. Finally, the encrypted content Kc[C] is decrypted using the acquired first content encryption key Kc. The content C obtained by the decryption is stored temporarily in the RAM 12 of the terminal apparatus PA. Thereafter, the content C is decrypted by, for example, the decoder 15 and is displayed on the display section 16.

Furthermore, using the first content encryption key Kc, the terminal apparatus PA encrypts the content C stored in the RAM 12 and then stores the encrypted content in the user data R/W area 27 of the memory card MC. At the same time, the terminal apparatus PA encrypts the content encryption key Kc on the basis of the changed new binding ID (BID') and then stores the encrypted content encryption key Kc into the protected R/W area 25 of the memory card MC. The procedure for and the contents of the process are the same as those explained in FIG. 5 expect that only the value of the binding ID (BID') differs from that in FIG. 5.

In this way, the content C is re-encrypted on the basis of the new binding ID (BID') after the change and the re-encrypted content is stored again in the memory card MC. The binding management file including the new binding ID (BID') is encrypted using the media ID (MID) and then the encrypted file is stored in the protected R/W area 25 of the memory card MC. The procedure for and the contents of the process are the same as those explained in FIG. 6 expect that only the value of the binding ID (BID') differs from that in FIG. 6.

As described above, in the first embodiment, the binding management file BFILE is encrypted using the media ID (MID) and the encrypted file is stored in the memory card MC. The binding management file BFILE includes the binding ID (BID) composed of the media ID (MID) and the additional ID (AID). Then, when the binding ID (BID) is changed as a result of the purchase of a new terminal apparatus or the change of the user, the binding management file BFILE is read from the memory card MC and decrypted, thereby acquiring the binding ID (BID) before the change. Then, the content Kc[C] is decrypted using the binding ID (BID) before the change. At the same time, the content C is re-encrypted using the new binding ID (BID') after the change and the re-encrypted content is stored again in the memory card MC.

Therefore, with the first embodiment, even if the binding ID is changed as a result of, for example, the purchase of a terminal apparatus PA or the change of the user, it is possible to decrypt and reproduce the content encrypted using the binding ID before the change and recorded in the memory card MC. Then, the decrypted content can be re-encrypted using the new binding ID after the change and be recorded again in the memory card MC.

Furthermore, in the first embodiment, when the binding ID is composed of the media ID and a plurality of additional IDs, a binding flag representing a combination of those IDs is included in the bind management data and stored in the memory card MC. This makes it unnecessary to repeat the process of trying to reproduce the content by creating binding IDs one after another for all of the ID combinations until an ID combination enabling the content to be reproduced has been found. As a result, it is possible to decrease the amount of computation and the time in the CPU 11 required for the decrypting process and therefore alleviate the processing load on the apparatus.

Moreover, in the first embodiment, a list of the binding IDs used for encryption in the past is treated as an invalid ID list. The invalid ID list is included in the bind management data and stored in the memory card MC. Therefore, when the content bound by an old additional ID or binding ID is updated so as to be bound by a new additional ID or binding ID, it is possible to determine reliably whether the new additional ID or binding ID can be used to update the binding.

### (Second Embodiment)

In a second embodiment of the present invention, when content is transferred from one terminal apparatus to another terminal apparatus in a content management system capable of connecting a plurality of terminal apparatuses to a management server via a network, the terminal apparatus of the transferor transfers a binding ID composed of the media ID and an additional ID to the management server and causes the server to store the binding ID. Then, the terminal apparatus of the transferee not only acquires the binding ID used by the terminal apparatus before the transfer from the management server and decrypts the content but also re-encrypts the content using a new binding ID after the transfer and records the encrypted content again.

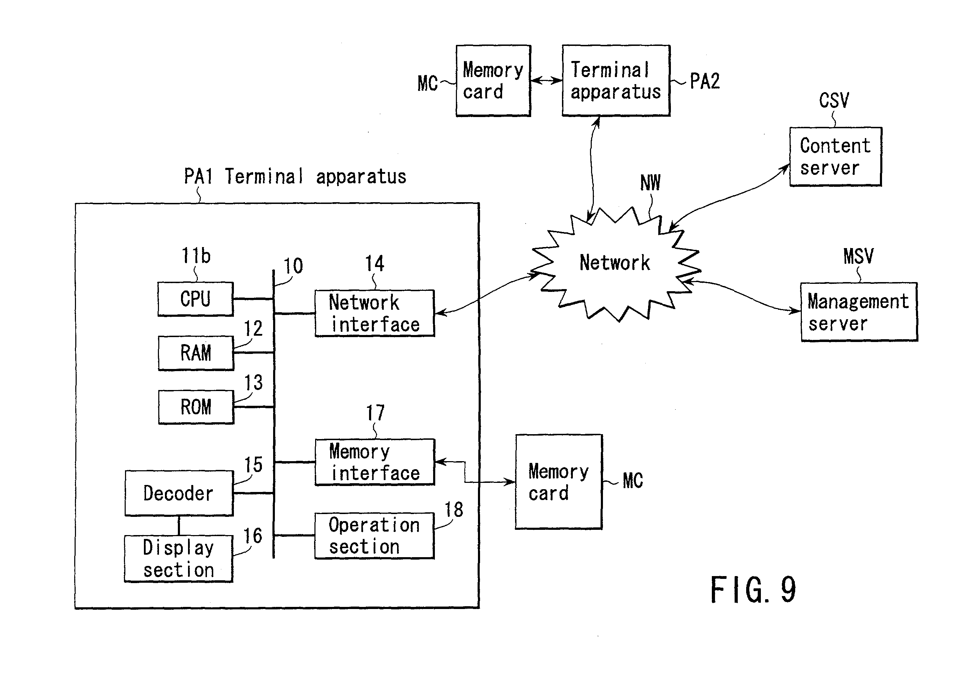

FIG. 9 is a block diagram showing the configuration of a content management system according to the second embodiment.

In FIG. 9, a plurality of terminal apparatuses PA1, PA2 are connectable to a content server CSV and a management server MSV via a network NW. For the sake of illustration, only the configuration of the terminal apparatus PA1 is shown and that of the terminal apparatus PA2 is omitted in FIG. 9. The same parts as those in FIG. 1 are indicated by the same reference numerals and a detailed explanation of them will be omitted.

In each of the terminal apparatuses PA, PA2, a RAM 12, a ROM 13, a network interface 14, a decoder 15, a display section 16, and a memory interface 17 are connected via a bus 10 to a CPU 11b using a microprocessor. Each of the terminal apparatuses PA1, PA2 is provided with an operation section 18. The operation section 18 is used to enter operating information for the user to transfer the content.

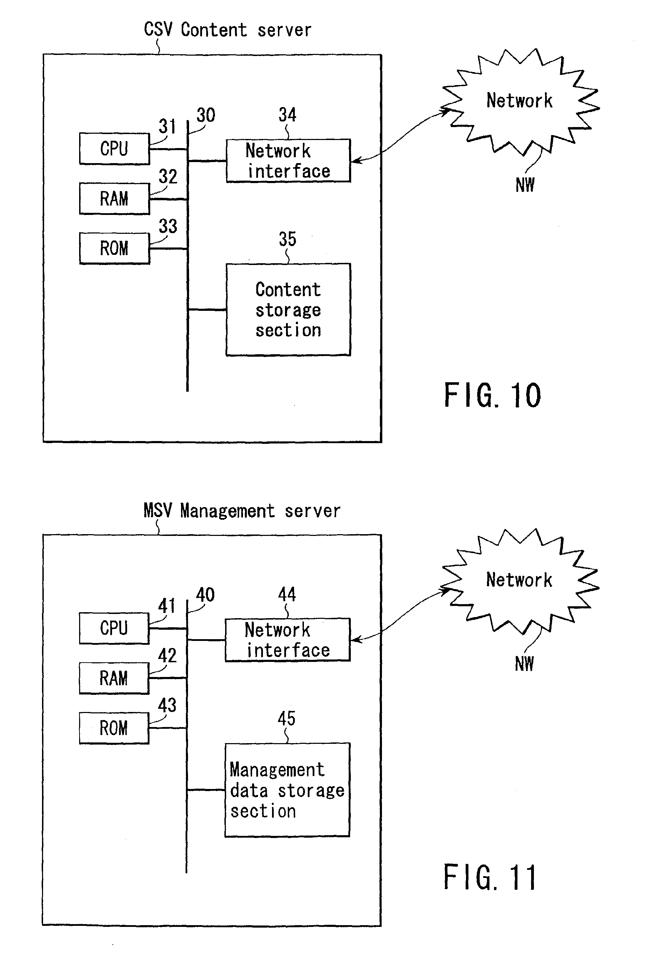

The content server CSV is such that, for example, a RAM 32, a ROM 33, a network interface 34, and a content storage section 35 are connected via a bus 30 to a CPU 31 as shown in FIG. 10.

The CPU 31 has the function of registering contents in the content storage section 35, the function of adding the registered contents to a content list, the function of delivering the content list, and the function of delivering the content and licensing information. Here, the content includes all types of content delivered to the user, including music, still pictures, moving pictures, text data, and programs. In addition, electronic mail, bookmarks, and personal data, such as a telephone directory, are also included in the concept of the content. The licensing information is information for limiting the operation when the user uses the content, such as the possible number of copies of the content, the possible number of moves, the number of renderings (meaning reproduction or display), the total time of renderings, the allowed time of rendering, the number of prints, the permission or inhibition of transfer, or the permission or inhibition of output to an external memory. The licensing information sometimes referred as usage rule information.

In the management server MSV, for example, a RAM 42, a ROM 43, a network interface 44, and a management data storage section 45 are connected via a bus 40 to a CPU 41 as shown in FIG. 11.

In the management data storage section 45, content management data for managing the content delivered to the terminal apparatuses PA1, PA2 by the content server CSV is stored. The content management data is composed of a user ID, a content ID, licensing information, a transferee user ID, a media ID (MID), and a binding ID (BID) .

The CPU 41 creates a content management data item and stores it into the management data storage section 45, each time the user downloads the content from the content server CSV. The CPU 41 may create the content management data user by user or content by content. Alternatively, it may create the content data that covers all of the users or contents.

Furthermore, the CPU 41 carries out the process necessary for transfer, when receiving a request related to the transfer of the content from the terminal apparatuses PA, PA2. This process includes the authenticating process carried out between the terminal apparatuses PA1, PA2, the process of storing the binding ID, and the process of delivering the binding ID.

Next, a content reproducing operation when the content is transferred from one terminal apparatus to another will be explained. A case where the terminal apparatus PA1 transfers the content to the terminal apparatus PA2 is taken as an example.

With the terminal apparatus PA1 of the transferor, the user selects the content to be transferred by operating the operation section 18 and enters the set ID or the user ID (or additional ID) of the terminal apparatus PA2 to which the right of the content is transferred. Then, the terminal apparatus PA1 transmits transfer registration request data to the management server MSV. The transfer registration request data includes the set ID or user ID of the terminal apparatus PA1 of the transferor, the content ID of the corresponding content, the set ID and user ID of the terminal apparatus of the transferee, licensing information on the corresponding content stored in the terminal apparatus PA1, and the binding ID (BID) of the content.

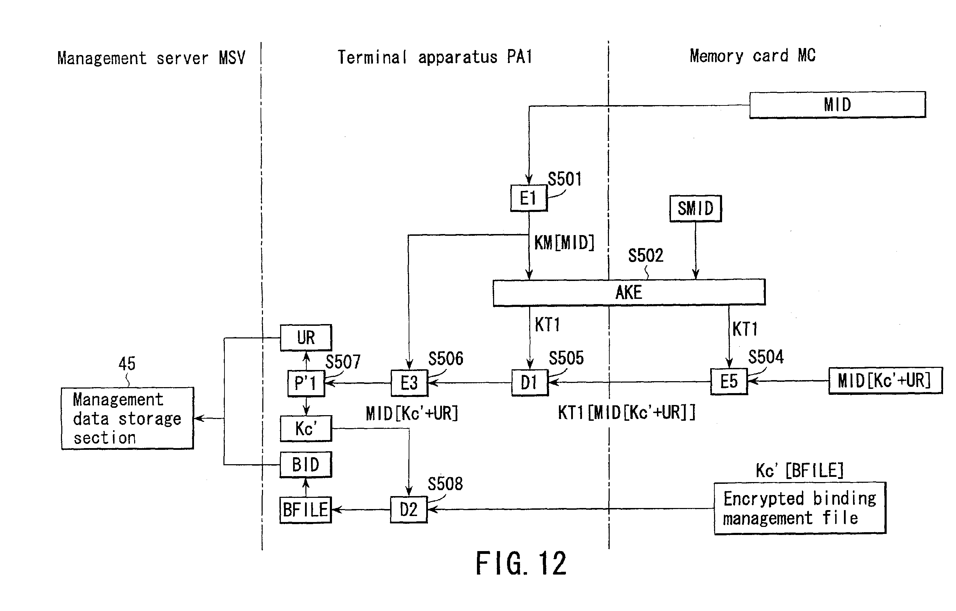

At this time, the binding ID (BID) is created as follows. FIG. 12 is a sequence diagram showing the procedure for the process and the contents of the process.

Specifically, in step S501, the terminal apparatus PA1 creates information (KM[MID]) necessary for a mutual authenticating process (AKE). KM[MID] is obtained by acquiring the media ID (MID) from the memory card MC and doing calculations using the acquired MID. Then, in step S502, the terminal apparatus PA1 executes a mutual authenticating process (AKE) using the created information KM[MID]. At this time, in the memory card MC, too, a mutual authenticating process (AKE) is carried out using the secure media ID (SMID). When the terminal apparatus PA1 and memory card MC have authenticated each other in the mutual authenticating process (AKE), the memory card MC proceeds to the next process.

The memory card MC reads the content encryption key information MID[Kc'+UR] from the protected R/W area 25. The information MID[Kc'+UR] has been encrypted using the media ID. Then, in step S504, the memory card MC encrypts the read-out information MID[Kc'+UR] using the key information KT1 created in the mutual authenticating process (AKE). Then, the memory card MC transfers the encrypted information KT1[MID[Kc'+UR]] to the terminal apparatus PA1.

In step S505, using the key information KT1 created in the mutual authenticating process (AKE), the terminal apparatus PA1 decrypts the encrypted information KT1[MID[Kc'+UR]] transferred from the memory card MC. Then, in step S506, the terminal apparatus PA1 decrypts the decrypted encrypted content encryption key information MID[Kc'+UR] using the information KM[MID] indicating the media ID created in step S501. As a result, information Kc'+UR, which is a combination of the second content encryption key Kc' and usage rule information UR about how to use the content, is obtained. Then, in step S507, the usage rule information UR about how to use the content is separated from the information Kc'+UR, thereby acquiring the second content key Kc'.

Then, the terminal apparatus PA1 reads the binding management file Kc'[BFILE] encrypted using the content encryption key Kc' from the user data R/W area 27 of the memory card MC. Thereafter, in step S508, the terminal apparatus PA1 decrypts the read-out encrypted binding management file Kc'[BFILE] using the content encryption key Kc'. From the decrypted binding management file BFILE, the binding ID (BID) before the change used in encrypting the content can be acquired.

When receiving the transfer registration request data from the terminal apparatus PA1 of the transferor, the management server MSV searches for the management data for the content on the basis of the set ID or user ID included in the transfer registration request data. The set ID or user ID of the terminal apparatus PA2 of the transferee, the binding ID (BID) used in encrypting the content and usage rule information UR about how to use the content are included in the content management data.

On the other hand, the user of the terminal apparatus PA2 of the transferee installs the memory card MC transferred from the user of the terminal apparatus PA1 into the terminal apparatus PA2. Then, the user performs operation to transfer a request to receive transfer to the management server MSV. Then, the terminal apparatus PA2 transmits the set ID or user ID of the terminal apparatus PA2 to the management server MSV.

The management server MSV retrieves for the content management data on the basis of the received set ID or user ID and then searches for the content in which the set ID or user ID of the transferee has been registered, on the basis of the retrieved content management data. Then, the management server creates a content list transferable to the terminal apparatus PA2 and transmits the list to the terminal apparatus PA2.

Receiving the content list, the terminal apparatus PA2 displays the received content list on the display section 16. In this state, when the user selects content on the operation section 18, the terminal apparatus PA2 transmits the selected content ID together with the set ID or user ID of the terminal apparatus PA2 to the management server MSV.

The management server MSV collates the set ID or user ID sent from the terminal apparatus PA2 with the ID of the transferee previously registered in the content management data. At the same time, the management server MSV collates the content ID transmitted from the terminal apparatus PA2 with a content ID stored in the content management data and selects one coinciding with the transmitted one. Then, the management server transmits the content ID of the selected content, licensing information, binding ID (BID), and usage rule information UR about how to use the content to the terminal apparatus PA2.

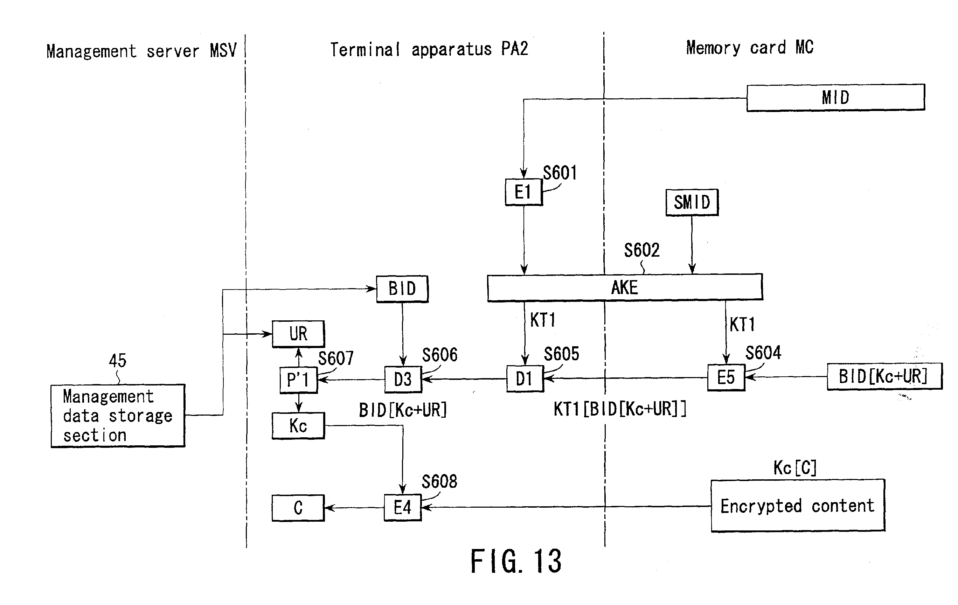

Using the binding ID (BID) sent from the management server MSV, the terminal apparatus PA2 of the transferee carries out the process of decrypting the content bound by the set ID or user ID of the terminal apparatus PA1 of the transferor as described below. FIG. 13 is a sequence diagram showing the procedure for the process and the contents of the process.

Specifically, in step S601, the terminal apparatus PA2 creates information (KM[MID]) necessary for a mutual authenticating process (AKE). KM[MID] is obtained by acquiring the media ID (MID) from the memory card MC and doing calculations using the acquired media MID. Then, in step 602, the terminal apparatus PA2 executes a mutual authenticating process (AKE) using the created information KM[MID]. At this time, in the memory card MC, too, a mutual authenticating process (AKE) is carried out using the secure media ID (SMID). When the terminal apparatus PA2 and memory card MC have authenticated each other in the mutual authenticating process (AKE), the memory card MC proceeds to the next process.

Specifically, the memory card MC reads the encryption management data BID[Kc+UR] from the protected R/W area 25. Then, in step S604, the memory card MC encrypts the read-out information BID[Kc+UR] using the key information KT1 created in the mutual authenticating process (AKE). Then, the memory card MC transfers the encrypted information KT1[BID[Kc+UR]] to the terminal apparatus PA2.

In step S605, using the key information KT1 created in the mutual authenticating process (AKE), the terminal apparatus PA2 decrypts the encrypted information KT1[BID[Kc+UR]] transferred from the memory card MC. Then, the terminal apparatus PA2 decrypts the decrypted information BID[Kc+UR] using the binding ID (BID) before the transfer sent from the management server MSV. As a result, information Kc+UR, which is a combination of the first content encryption key Kc and usage rule information UR about how to use the content, is obtained. Then, the usage rule information UR about how to use the content is separated from the information Kc+UR, thereby acquiring the first content encryption key Kc.

Finally, the encrypted content Kc[C] recorded in the memory card MC is decrypted using the acquired first content encryption key Kc. The content C obtained by the decryption is stored temporarily in the RAM 12 of the terminal apparatus PA2. Thereafter, the content C is decrypted by, for example, the decoder 15 and is displayed on the display section 16.

The usage information UR about how to use content stored in the memory card may continue being used instead of using the one stored in the management server MSV.

Furthermore, using the first content encryption key Kc, the terminal apparatus PA2 re-encrypts the content C stored in the RAM 12 and then stores the re-encrypted content in the user data R/W area 27 of the memory card MC. At the same time, the terminal apparatus PA2 encrypts the first content encryption key Kc on the basis of the binding ID (BID') used by the terminal apparatus PA2 of the transferee and then stores the encrypted first content encryption key Kc into the protected R/W area 25 of the memory card MC. The procedure for and the contents of the process are the same as those explained in FIG. 5 of the first embodiment expect that only the value of the binding ID (BID') differs from that in FIG. 5.

In this way, the content C is re-encrypted on the basis of the binding ID (BID') used by the terminal apparatus PA2 of the transferee and the re-encrypted content is stored again in the memory card MC. The binding management file including the binding ID (BID') used by the terminal apparatus PA1 of the transferee is encrypted using the media ID (MID) and then the encrypted file is stored in the protected R/W area 25 of the memory card MC. The procedure for and the contents of the process are the same as those explained in FIG. 6 of the first embodiment expect that only the value of the binding ID (BID') differs from that in FIG. 6.

Finally, the terminal apparatus PA2 transmits to the management server MSV the message that the transfer has been completed. Receiving the message, the management server MSV adds the set ID or user ID of the terminal apparatus PA2 to the content management data stored in the management data storage section 45. In addition, the management server sets "0" in all of fields of the set ID or user ID used by the terminal apparatus PA2 of the transferee and the binding ID (BID'). That is, the management server sets the above fields as ineffective fields.

As described above, in the second embodiment, when the right of the content is transferred from the terminal apparatus PA1 to the terminal apparatus PA2, the binding ID used by the terminal apparatus PA1 before the transfer is sent via the management server MSV. Therefore, even when the binding ID is changed as a result of the transfer of content, the terminal apparatus PA2 of the transferee can decrypt and reproduce the content encrypted on the basis of the binding ID used by the terminal apparatus PA1 before the transfer. The decrypted content can be re-encrypted using a new binding ID used by the terminal apparatus PA2 of the transferee. Then, the encrypted content can be recorded in the memory card MC again.

In the above explanation, the binding ID (BID) used by the terminal apparatus PA1 of the transferor is stored in the management server MSV and thereafter is transferred to the terminal apparatus PA2 of the transferee. Alternatively, after the additional ID (AID) is stored instead of the binding ID (BID), the additional ID may be transferred. In this case, when the terminal apparatus PA2 of the transferor decrypts the content and re-encrypts the content, it creates a binding ID on the basis of the additional ID (AID) transferred from the management server MSV and information KM[MID] including the media ID. Then, it is necessary to decrypt the content or re-encrypt the decrypted content on the basis of the created binding ID (BID) .

### (Other Embodiments)

While in the first embodiment, the content has been encrypted using the content encryption key Kc and recorded in the memory card MC and the content encryption key Kc has been encrypted using the binding ID and stored in the protected R/W area of the memory card MC. The present invention is not limited to this. For instance, the content may be encrypted using the binding ID in place of the content encryption key Kc and recorded in the memory card MC. In this case, too, the binding management file BFILE including the binding ID is encrypted using the media ID (MID) and stored in the memory card MC in the same manner as in the first embodiment.

Furthermore, in the second embodiment, the content server CSV and management server MSV have been provided separately. However, these servers may be integrated into a single server (for example, a management server).

In addition, in each of the embodiments, the terminal apparatuses have both the recording and reproducing functions. However, the terminal apparatuses may have only the reproducing function. In this case, although it is impossible to re-encrypt the content and record the re-encrypted content, it is possible to decrypt and reproduce the content encrypted using the binding ID before the change.

As for the types and configurations of the terminal apparatuses, the configurations of the storage area provided in the recording medium, the configuration of the content management system, the configuration of the content server and management server, the procedure for the processes of encrypting and decrypting the content and the encryption key, and the contents of the processes, this invention may be practiced or modified in still other ways without departing from the spirit or character thereof.

## Claims

1. A terminal apparatus (PA) for recording content by use of a recording medium (MC), **characterized by** comprising:
means for encrypting the content on the basis of binding information created from first unique information specifying the recording medium (MC) and second unique information separately set from the first unique information and recording the encrypted content in the recording medium (MC);
means for encrypting the binding information on the basis of the first unique information and causing the recoding medium (MC) to store the encrypted binding information;
means for reading the encrypted binding information from the recording medium (MC) and decrypting the encrypted binding information on the basis of the first unique information; and
means for reading the encrypted content from the recording medium (MC) and decrypting the read-out encrypted content on the basis of the decrypted binding information.

2. The terminal apparatus according to claim 1, **characterized by** further comprising:
means for, when the second unique information has been changed to third unique information, re-creating the binding information on the basis of the third unique information and the first unique information; and
means for re-encrypting the decrypted content on the basis of the re-created binding information and recording the re-encrypted content in the recording medium (MC).

3. The terminal apparatus (PA) according to claim 1, **characterized by** further comprising:
means for creating a list of the binding information used in encrypting the content; and
means for causing the recording medium (MC) to store the created list of the binding information.

4. The terminal apparatus (PA) according to claim 1, **characterized by** further comprising:
means for, when the second unique information is composed of a plurality of pieces of information, causing the recording medium (MC) to store information representing a combination of a plurality of pieces of information constituting the second unique information.

5. A terminal apparatus (PA) for recording content by use of a recording medium (MC), **characterized by** comprising:
means for encrypting the content on the basis of a first encryption key and recording the encrypted content in the recording medium (MC);
means for encrypting the first encryption key on the basis of binding information created from first unique information specifying the recording medium (MC) and second unique information separately set from the first unique information and causing the recording medium (MC) to store the encrypted first encryption key;
means for encrypting the binding information on the basis of a second encryption key and causing the recording medium (MC) to store the encrypted binding information;
means for encrypting the second encryption key on the basis of the first unique information and causing the recording medium (MC) to store the encrypted second encryption key;
first decrypt means for reading the encrypted second encryption key from the recording medium (MC) and decrypting the encrypted second encryption key on the basis of the first unique information;
second decrypt means for reading the encrypted binding information from the recording medium (MC) and decrypting the encrypted binding information on the basis of the decrypted second encryption key;
third decrypt means for reading the encrypted first encryption key from the recording medium (MC) and decrypting the encrypted first encryption key on the basis of the binding information; and
fourth decrypt means for reading the encrypted content from the recording medium (MC) and decrypting the encrypted content on the basis of the decrypted first encryption key.

6. The terminal apparatus (PA) according to claim 5, **characterized by** further comprising:
means for, when the second unique information has been changed to third unique information, re-creating the binding information on the basis of the third unique information and the first unique information; and
means for re-encrypting the first encryption key on the basis of the re-created binding information and causing the recording medium to store the re-encrypted first encryption key.

7. The terminal apparatus (PA) according to claim 5, **characterized by** further comprising:
means for creating a list of the binding information used in encrypting the first encryption key; and
means for causing the recording medium (MC) to store the created list of the binding information.

8. The terminal apparatus according to claim 5, **characterized by** further comprising:
means for, when the second unique information is composed of a plurality of pieces of information, causing the recording medium (MC) to store information representing a combination of a plurality of pieces of information constituting the second unique information.

9. The terminal apparatus (PA) according to claim 5, **characterized by** further comprising:
fifth decrypt means for, when the binding information is known, reading the encrypted first encryption key from the recording medium (MC) and decrypting the encrypted first encryption key on the basis of the known binding information;
decision means for determining whether the first encryption key has been decrypted properly by the fifth decrypt means;
means for, when the decision means has determined that the first encryption key has been decrypted properly, decrypting the encrypted content on the basis of the first encryption key decrypted by the fifth decrypt means; and
means for, when the decision means has determined that the first encryption key has not been decrypted properly, causing the first, second, third, and fourth decrypt means to operate.

10. A recording medium (MC) used in a terminal apparatus (PA) with the function of recording and reproducing content, the recording medium (MC) **characterized by** comprising:
a content storage area (27) provided to store content encrypted on the basis of binding information created from first unique information specifying the recording medium (MC) and second unique information separately set from the first unique information; and
a binding information storage area provided to store the binding information encrypted on the basis of the first unique information.

11. The recording medium (MC) according to claim 10, **characterized by** further comprising a storage area to store information representing a combination of a plurality of pieces of information constituting the second unique information, when the second unique information is composed of a plurality of pieces of information.

12. The recording medium (MC) according to claim 10, **characterized by** further comprising a storage area to store a list of a plurality of pieces of binding information, when there are a plurality of pieces of binding information used in encrypting the content.

13. A recording medium (MC) used in a terminal apparatus (PA) with the function of recording and reproducing content, the recording medium (MC) **characterized by** comprising:
a content storage area (273) provided to store content encrypted on the basis of first encryption key;
a first encryption key storage area (251) provided to store the first encryption key encrypted on the basis of binding information created from first unique information specifying the recording medium (MC) and second unique information separately set from the first unique information;
a binding information storage area (272) provided to store the binding information encrypted on the basis of a second encryption key; and
a second encryption key storage area provided to store the second encryption key encrypted on the basis of the first unique information.

14. The recording medium (MC) according to claim 12, **characterized by** further comprising a storage area to store information representing a combination of a plurality of pieces of information constituting the second unique information, when the second unique information is composed of a plurality of pieces of information.

15. The recording medium (MC) according to claim 13, **characterized by** further comprising a storage area to store a list of a plurality of pieces of binding information, when there are a plurality of pieces of binding information used in encrypting the content.

16. A content management system which enables a first terminal apparatus (PA1) serving as the transferor of content and a second terminal apparatus (PA2) serving as the transferee of the content to be connected to a management server (MSV) via a network (NW), the content management system **characterized by** comprising:
the first terminal apparatus (PA1) includes
means for encrypting the content directly or indirectly using binding information created from first unique information specifying a recording medium (MC) in which the content is to be recorded and second unique information separately set from the first unique information and recording the encrypted content in the recording medium (MC), and
means for transferring the binding information or the second unique information to the management server (MSV) via the network (NW) and causing the management server to store the information,
the management server (MSV) includes
means for storing the binding information or second unique information transferred from the first terminal apparatus (PA1) in such a manner that the binding information or second unique information corresponds to the first terminal apparatus (PA1) and the content to be bound;
means for, when receiving a content transfer request from the second terminal apparatus (PA2), determining whether the second terminal apparatus (PA2) is the authenticated transferee; and
means for, when the determination has shown that the second terminal apparatus (PA2) is the authenticated transferee, transferring the stored binding information or second unique information to the second terminal apparatus (PA2) of the requester via the network (NW), and
the second terminal apparatus (PA2) includes
means for decrypting the transferred content on the basis of the binding information or second unique information transferred from the management server (MSV) according to the content transfer request.

17. A management server (MSV) connectable to a first terminal apparatus (PA1) serving as the transferor of content and a second terminal apparatus (PA2) serving as the transferee of the content via a network (NW), the management server (MSV) **characterized by** comprising:
means for receiving from the first terminal apparatus (PA1) binding information created from first unique information specifying a recording medium (MC) and second unique information differently set from the first unique information and used to encrypt the content, and storing the binding information;
means for, when receiving a content transfer request from the second terminal apparatus (PA2), determining whether the second terminal apparatus (PA2) is the authenticated transferee; and
means for, when the determination has shown that the second terminal apparatus (PA2) is the authenticated transferee, transferring the stored binding information to the second terminal apparatus (PA2) of the requester via the network (NW) in order for the second terminal apparatus (PA2) to decrypt the transferred content.

18. A management server (MSV) connectable to a first terminal apparatus (PA1) serving as the transferor of content and a second terminal apparatus (PA2) serving as the transferee of the content via a network (NW), the management server (MSV) **characterized by** comprising:
means for receiving from the first terminal apparatus (PA1) second unique information differently set from first unique information specifying a recording medium (MC) and used to encrypt the content, and storing the second unique information;
means for, when receiving a content transfer request from the second terminal apparatus (PA2), determining whether the second terminal apparatus (PA2) is the authenticated transferee; and
means for, when the determination has shown that the second terminal apparatus (PA2) is the authenticated transferee, transferring the stored second unique information to the second terminal apparatus (PA2) of the requester via the network (NW) in order for the second terminal apparatus (PA2) to decrypt the transferred content.
